# EUROPEAN PATENT APPLICATION

(11) **EP 4 316 902 A1**
(43) Date of publication of application: **07.02.2024**
(21) Application number: 21934096.5
(22) Date of filing: 02.04.2021
(51) Int. Cl.: B60L 53/30, B60L 53/20

(54) **CONFIGURATION METHOD FOR POWER DISTRIBUTION, SYSTEM, DEVICE, AND STORAGE MEDIUM**

(71) Applicant: Zhejiang Geely Holding Group Co., Ltd., Hangzhou, Zhejiang 310051 (CN); Geely Automobile Research Institute (Ningbo) Co., Ltd, Ningbo, Zhejiang 315336 (CN)
(72) Inventor: ZHANG, Ruifeng, Hangzhou Bay New District Ningbo, Zhejiang 315336 (CN); YAN, Yan, Hangzhou Bay New District Ningbo, Zhejiang 315336 (CN); JIANG, Daiping, Hangzhou Bay New District Ningbo, Zhejiang 315336 (CN); ZHAO, Yue, Hangzhou Bay New District Ningbo, Zhejiang 315336 (CN); ZHAO, Yangbo, Hangzhou Bay New District Ningbo, Zhejiang 315336 (CN); HU, Zhen, Hangzhou Bay New District Ningbo, Zhejiang 315336 (CN); YU, Guangmu, Hangzhou Bay New District Ningbo, Zhejiang 315336 (CN)
(74) Representative: Kraus & Lederer Patentanwälte PartGmbB
(86) International application number: PCT/CN2021/085364
(87) International publication number: WO 2022/205439

(57) **Abstract**

The present disclosure discloses a configuration method, system, and device for power distribution, and a storage medium. The method includes: controlling closing of at least one target relay in response to a power distribution request instruction, in which the closing of the at least one target relay is configured to bring a target input channel of the power distribution into communication with a target output channel of the power distribution; and traversing at least one power module until one of the at least one power module corresponding to the target input channel is determined. During the traversing, steps are performed of: controlling a current power module to output a voltage; collecting a real-time voltage at the target output channel; and determining a correspondence between the current power module and the target input channel when the real-time voltage matches with the output voltage. According to the present disclosure, a configuration relationship between an input channel and the power module is automatically identified during charging of a charging device. Therefore, utilization ratio of the power module of a charging system is improved.

## Description

### FIELD

The present disclosure relates to the field of charging technologies, and more particularly, to a configuration method, system, and device for power distribution, and a storage medium.

### BACKGROUND

With the advancement of charging technologies, a flexible charging technology using a power distribution module is proposed in a construction solution of a current charging station. In a typical charging device structure, each charging gun is fixedly connected to several power modules through a high-voltage wire harness. Therefore, a 120kW power module needs to be configured for a 60kW charging pile with two guns. However, in an actual charging process, an operation condition in which the two guns simultaneously outputs 60 kW is relatively rare. In most cases, at least one charging gun does not have a full power output requirement. Therefore, after the 120kW power module is equipped in practice, some power modules will be in an idle state in most cases.

In a charging device solution using a Power Distribution Unit (PDU), since charging parameters of the two guns are different, a controller configured to control the power module to output a parameter (voltage/current) needs to perform a separate voltage/current control and adjustment on each module. However, before controlling, it is essential to identify which charging gun a current module is assigned to through the PDU. During wiring and mounting, it is necessary to manually record or modify a power module number of a PDU input channel. In this case, the manual operation to some extent raises proficiency requirements for an operator. Meanwhile, personnel errors inevitably occurs.

### SUMMARY

In order to solve problems in the related art, embodiments of the present disclosure provide a configuration method, system, and device for power distribution, and a storage medium. The technical solutions will be described below.

In one aspect, provided is a configuration method for power distribution. The method includes: controlling closing of at least one target relay in response to a power distribution request instruction, in which the closing of the at least one target relay is configured to bring a target input channel of the power distribution into communication with a target output channel of the power distribution; and traversing at least one power module until one of the at least one power module corresponding to the target input channel is determined. During the traversing, steps are performed of: controlling an output voltage of a current power module; collecting a real-time voltage at the target output channel; and determining a correspondence between the current power module and the target input channel when the real-time voltage matches with the output voltage.

In another aspect, provided is a configuration system for power distribution. The configuration system includes: a response module configured to control closing of at least one target relay in response to a power distribution request instruction, in which the closing of the at least one target relay is configured to bring a target input channel of the power distribution into communication with a target output channel of the power distribution; and a traversing module configured to traverse at least one power module until one of the at least one power module corresponding to the target input channel is determined. During the traversing, steps are performed of: a voltage control module configured to control an output voltage of a current power module; a collection module configured to collect a real-time voltage at the target output channel; and a relationship determination module configured to determine a correspondence between the current power module and the target input channel when the real-time voltage matches with the output voltage.

Correspondingly, the at least one target relay includes a plurality of target relays, and the plurality of target relays is arranged in a form of a matrix with N rows and M columns.

Correspondingly, the response module includes a relay closing module configured to close the plurality of the target relays arranged in the matrix of the N rows and the M columns. Target input channels where the plurality of target relays is located are different from each other.

Correspondingly, the plurality of target relays being arranged in the form of the matrix with the N rows and the M columns includes: the target relays in each of the M columns being positioned at one input channel. The target relays located on the one input channel are connected to N predetermined voltage monitoring devices, respectively. Each of the N predetermined voltage monitoring devices is configured to monitor a real-time voltage at the output channel.

Correspondingly, in the case of the voltage control module, the configuration system includes: a power module connection module configured to control the power module to be connected in parallel with a set of power modules to output voltages.

Correspondingly, the configuration system includes, subsequent to the traversing module: a determination module configured to determine whether configurations of all power modules with the input channel are completed, end the configuration for the power distribution, in response to determining that the configurations of all power modules with the input channel are completed, and control, in response to determining that the configurations of all the power modules with the input channels are not completed, closing of a next target relay, and traverse the at least one power module until one of the at least one the power module corresponding to the target input channel is determined, until the configurations of all power modules with the input channel are completed.

Correspondingly, the configuration system includes, when the real-time voltage mismatches with the output voltage: a first control module configured to control an output voltage of a next power module; a collection module configure to collect the real-time voltage at the target output channel; a first determination module configure to: determine whether the real-time voltage is equal to the output voltage of the next power module, determine a correspondence between the next power module and the target input channel in response to determining that the real-time voltage is equal to the output voltage of the next power module, and controlling, in response to determining that the real-time voltage is unequal to the output voltage of the next power module, the output voltage of the power module, and collecting the real-time voltage at the target output channel, until the real-time voltage value is equal to the output voltage of the power module.

In yet another aspect, provided is a device. The device includes a processor and a memory. The memory has at least one instruction, at least one program, a code set, or an instruction set stored thereon. The at least one instruction, the at least one program, the code set, or the instruction set is loaded and executed by the processor to implement the above-mentioned configuration method for the power distribution.

In still yet another aspect, provided is a storage medium. The storage medium has at least one instruction, at least one program, a code set, or an instruction set stored thereon. The at least one instruction, the at least one program, the code set, or the instruction set is loaded and executed by a processor to implement the above-mentioned configuration method for the power distribution.

The technical solution according to the embodiments of the present disclosure at least provides the following beneficial effects.

According to the embodiments of the present disclosure, through the power distribution instruction, after obtaining the instruction, the controller can control the output voltage of the power module and the closing of the relay, an input channel where a closed relay is located is determined by collecting the output voltage by means of a predetermined voltage collection device. Then, the power module configured for the input channel is determined. In the above technical solution, a mapping relationship between the input channel and the power module can be automatically recognized during charging of a charging device, to reduce an on-site wiring and mounting difficulty and prevent harm due to personnel operation errors.

### BRIEF DESCRIPTION OF THE DRAWINGS

In order to clearly explain technical solutions of embodiments of the present disclosure or in the related art, drawings used in description of the embodiments or the related art will be briefly described below. The drawings described below merely illustrate some embodiments of the present disclosure. Based on these drawings, other drawings can be obtained by those skilled in the art without creative effort.
FIG. 1 is a flowchart of a configuration method for power distribution according to an embodiment of the present disclosure.
FIG. 2 is a configuration hardware control diagram for power distribution according to an embodiment of the present disclosure.
FIG. 3 is an executing flowchart of a configuration method for power distribution according to an embodiment of the present disclosure.
FIG. 4 is a configuration system for power distribution according to an embodiment of the present disclosure.

### DETAILED DESCRIPTION

Reference will be made clearly and completely technical solutions in the embodiments of the present disclosure with accompanying drawings. Obviously, the embodiments described here are only part of the embodiments of the present disclosure and are not all embodiments of the present disclosure. Based on the embodiments of the present disclosure, other embodiments obtained by those skilled in the art without creative labor are within scope of the present disclosure.

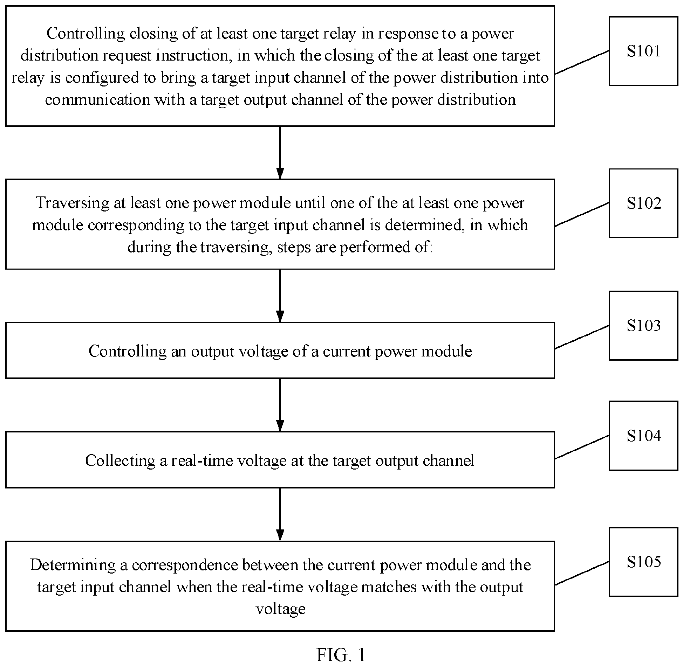

Referring to FIG. 1, which illustrates a flowchart of a configuration method for power distribution according to an embodiment of the present disclosure. It should be noted that the present specification provides a method operation step according to an embodiment or a flowchart, and may include more or fewer operation steps based on conventional or non-creative efforts. A sequence of the steps listed in the embodiments is merely one of a plurality of step execution sequences, and does not represent a unique execution sequence. When executed in practice, a system or a server product may be executed sequentially or in parallel (e.g., a parallel processor or a multithread processing environment) based on the method sequence illustrated in the embodiments or the accompanying drawings. As illustrated in FIG. 1, the method specifically includes operations at blocks S101 an S 102.

At block S101, closing of at least one target relay is controlled in response to a power distribution request instruction. The closing of the at least one target relay is configured to bring a target input channel of the power distribution into communication with a target output channel of the power distribution.

At block S102, at least one power module is traversed until one of the at least one power module corresponding to the target input channel is determined. During the traversing, operations at blocks S 103 to S 105 are performed.

At block S 103, an output voltage of a current power module is controlled.

At block S104, a real-time voltage at the target output channel is collected.

At block S 106, a correspondence between the current power module and the target input channel is determined when the real-time voltage matches with the output voltage.

Further, the at least one target relay includes a plurality of target relays, and the plurality of target relays is arranged in a form of a matrix with N rows and M columns.

According to the embodiments of the present disclosure, the relays are arranged in the form of the matrix with the N rows and the M columns, aiming to fully utilize the power module to supply a voltage to a charging device and facilitate monitoring of the output voltage to confirm the input channel corresponding to the power module.

Further, the controlling the closing of the at least one target relay in response to the power distribution instruction further includes: closing the plurality of the target relays arranged in the matrix of the N rows and the M columns. Target input channels where the plurality of target relays is located are different from each other.

In the embodiments of the present disclosure, when the correspondence between the power module and the target input channel is determined by the closed relay, one relay may be closed, or a plurality of relays may be closed simultaneously. When the plurality of relays is closed, it is necessary to ensure that the plurality of relays cannot be simultaneously in one target input channel. In this way, it is possible to easily determine a correspondence between the power module and each of the input channel and the output channel. As a result, operation efficiency is improved.

Further, the plurality of target relays being arranged in the form of the matrix with the N rows and the M columns includes: the target relays in each of the M columns being positioned at one input channel. The target relays located on the one input channel are connected to N predetermined voltage monitoring devices, respectively. Each of the N predetermined voltage monitoring devices is configured to monitor a real-time voltage at the output channel.

In the embodiments of the present disclosure, a predetermined voltage monitoring device is mounted at the output channel. The voltage monitoring device is configured to monitor a voltage at the output channel to be compared with a voltage output by the power module, and then determine the correspondence between the power module and each of the input channel and the output channel.

Further, the controlling the current the output voltage of power module includes: controlling the power module to be connected in parallel with a set of power modules to voltages.

In the embodiments of the present disclosure, the power module is connected in parallel with the plurality of power modules, aiming to obtain voltages required for the charging device and avoid a problem of idle power. Therefore, it is possible to facilitate providing a plurality of voltages by the charging devices with different requirements.

Further, the configuration method further includes, subsequent to the traversing the at least one power module until the one of the at least one power module corresponding to the target input channel is determined: determining whether configurations of all power modules with the input channel are completed; ending the configuration for the power distribution, in response to determining that the configurations of all power modules with the input channel are completed; and controlling, in response to determining that the configurations of all power modules with the input channels are not completed, closing of a next target relay, and traversing the at least one power module until one of the at least one the power module corresponding to the target input channel is determined, until the configurations of all power modules with the input channel are completed.

In the embodiments of the present disclosure, operations at this step are to determine whether the configurations of all power modules with the input channel are completed.

Further, the configuration method further includes, when the real-time voltage mismatches with the output voltage: controlling an output voltage of a next power module; collecting the real-time voltage at the target output channel; determining whether the real-time voltage is equal to the output voltage of the next power module; determining a correspondence between the next power module and the target input channel in response to determining that the real-time voltage is equal to the output voltage of the next power module; and controlling, in response to determining that the real-time voltage is unequal to the output voltage of the next power module, the output voltage of the power module, and collecting a real-time voltage at the target output channel, until the real-time voltage value is equal to the output voltage of the power module.

In the embodiments of the present disclosure, when the voltage monitored by the voltage monitoring device mismatches with the voltage output by the power module, it is necessary to control the output voltage of the next power module again and then collect the voltage at the output channel until the real-time voltage value is equal to the output voltage of the power module. This process is constitutes performed in a cycle manner until a predetermined condition is satisfied. At this time, it is determined that the correspondence between the power module and each of the input channel and the output channel is completed.

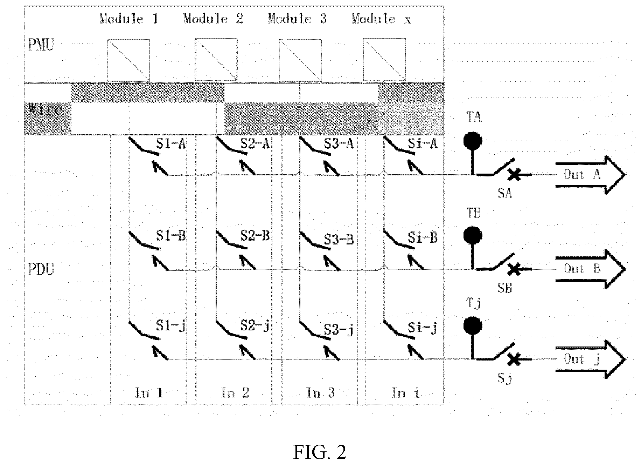

In addition, further explanation and description will be provided for the power configuration method and a hardware device used for the configuration. As illustrated in FIG. 2, a configuration hardware control diagram for power distribution according to an embodiment of the present disclosure is illustrated. An individual voltage/current control and adjustment is performed on each power module by a controller (PMU) based on a power distribution request instruction, where Module 1~x represent power modules configured to output a parameter voltage/current; Wire represents a connection line; In i represents an i-th input channel; S i-j represents i*j relays, and the i*j relays are configured to control a communicated power distribution channel in a matrix arrangement manner; and Tj represents a j-th predetermined voltage collection device; and Out j is a j-th output channel.

Specifically, one function distribution module (PDU) has a plurality of input channels and a plurality of output channels. Different input channels may be mapped to different output channels, and operation quality of each power module in the input channel is controlled by the PMU. During wiring and assembling, different modules may be connected to different input modules of the PDU. The PDU realizes the mapping of the relationship between the input channels and the output channels, and the PMU needs to control the power module connected to the input channel based on output requirements.

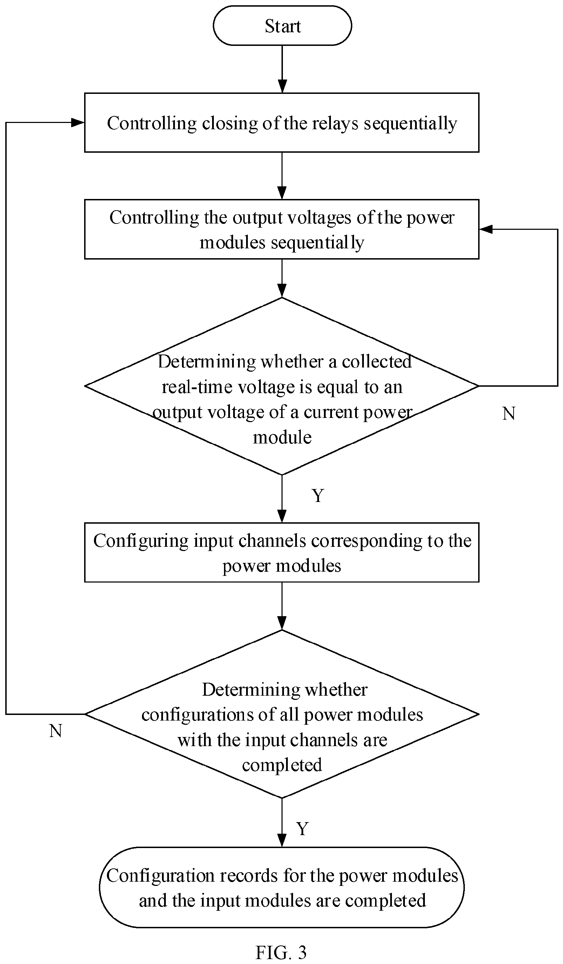

The configuration method corresponding to the configuration hardware control diagram for the power distribution is illustrated in FIG. 3. FIG. 3 is an executing flowchart of a configuration method for power distribution according to an embodiment of the present disclosure, aiming to automatically recognize and configure the input channel and the power module. Specifically, for example, when all relays in the PDU are in an off state, one relay, e.g., S1-A illustrated in FIG. 2, is closed. In this case, Module 1-Module X are sequentially controlled by the PMU to output a specific voltage, such as 300V, and real-time voltages are sampled at output positions TA/TB/.../Tj. When the Module 1 is controlled to output the voltage of 300V, the voltage of 300 V is sampled at the output position TA, and it can be concluded that a power module corresponding to the S1-A is the Module 1. That is, the power module configured for an input channel In 1 of the PDU is the Module 1. Then, the S1-A is opened, S2-A is closed, and the Modules are sequentially controlled again and real-time sampling is performed at the output position Tj based on the above-mentioned method to determine a power module Module x configured for an input channel In2 of the PDU. Finally, a power module configured for each input channel of the PDU can be identified through sequential actions on all the relays.

Similarly, a charging gun corresponding to each output channel of the PDU can be identified by sampling a voltage at the sampling point Tj.

As can be seen from the above-mentioned technical solution of the embodiments of the present disclosure, in the embodiments of the present disclosure, through the power distribution instruction, after obtaining the instruction, the controller can control the output voltage of the power module and the closing of the relay, and the input channel where the closed relay is located is determined by collecting the output voltage by means of the predetermined voltage collection device, and then the power module configured for the input channel is determined. In the technical solution, the configuration relationship between the input channel and the power module is automatically recognized during charging of the charging device, to reduce an on-site wiring and mounting difficulty and prevent harm due to a personnel operation error.

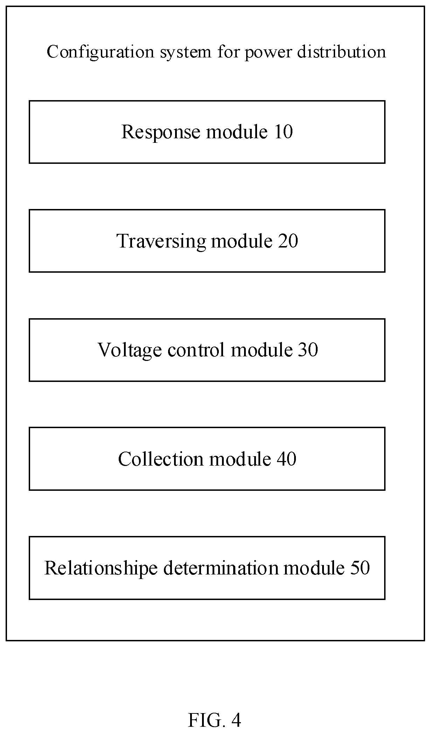

The embodiments of the present disclosure further provide a configuration system for power distribution. As illustrated in FIG. 4, the system includes a response module 10 and a a traversing module 20. The response module 10 is configured to control closing of at least one target relay in response to a power distribution request instruction, and the closing of the at least one target relay is configured to bring a target input channel of the power distribution into communication with a target output channel of the power distribution. The traversing module 20 is configured to traverse at least one power module until one of the at least one power module corresponding to the target input channel is determined. During the traversing, steps are performed of: a voltage control module 30 configured to control an output voltage of a current power module; a collection module 40 configured to collect a real-time voltage at the target output channel; and a relationship determination module 50 configured to determine a correspondence between the current power module and the target input channel when the real-time voltage matches with the output voltage.

Correspondingly, the at least one target relay includes a plurality of target relays, and the plurality of target relays is arranged in a form of a matrix with N rows and M columns.

Correspondingly, the response module 10 includes a relay closing module configured to close the plurality of the target relays arranged in the matrix of the N rows and the M columns. Target input channels where the plurality of target relays is located are different from each other.

Correspondingly, the plurality of target relays being arranged in the form of the matrix with the N rows and the M columns includes a relay connection module configured for the target relays in each of the M columns being positioned at one input channel. The target relays located on the one input channel are connected to N predetermined voltage monitoring devices, respectively. Each of the N predetermined voltage monitoring devices is configured to monitor a real-time voltage at the output channel.

Correspondingly, in the case of the voltage control module 30, the configuration system includes a power module connection module configured to control the power module to be connected in parallel with a set of power modules to output voltages.

Correspondingly, the configuration system includes, subsequent to the traversing module 20, a determination module: configured to determine whether configurations of all power modules with the input channel are completed, end the configuration for the power distribution, in response to determining that the configuration of all power modules to the input channel is completed, and control, in response to determining that the configurations of all power modules with the input channels are not completed, closing of a next target relay, and traverse the at least one power module until one of the at least one power module corresponding to the target input channel is determined, until the configurations of all power modules with the input channel are completed.

Correspondingly, the configuration system includes: a first control module configured to control, when the real-time voltage mismatches with the output voltage, an output voltage of a next power module; a collection module configure to collect a real-time voltage at the target output channel; a first determination module configure to: determine whether the real-time voltage is equal to the output voltage of the next power module, determine a correspondence between the next power module and the target input channel in response to determining that the real-time voltage is equal to the output voltage of the next power module; and control, in response to determining that the real-time voltage is unequal to the output voltage of the next power module, the output voltage of the power module, and collect the real-time voltage at the target output channel, until the real-time voltage value is equal to the output voltage of the power module.

With regard to the system in the above-mentioned embodiments, the specific manner in which operations are performed by each module has been described in detail in the method embodiments, which will not be described in detail herein.

Embodiments of the present disclosure provide a device. The device includes a processor and a memory. The memory has at least one instruction, at least one program, a code set, or an instruction set stored thereon. The at least one instruction, the at least one program, the code set, or the instruction set is loaded and executed by the processor to implement the configuration method for the power distribution according to the above-mentioned method embodiments.

Embodiments of the present disclosure provide a storage medium. The storage medium may be disposed in a server to save at least one instruction, at least one program, a code set, or an instruction for implementing a data processing method in the method embodiments. The at least one instruction, the at least one program, the code set, or the instruction set is loaded and executed by a processor to implement the configuration method for the power distribution according to the above-mentioned method embodiments.

It should be noted that: the above sequence numbers of the embodiments of the present disclosure are for description only, and do not represent superiority or inferiority of the embodiments. The specific embodiments of the present specification are described above. Other embodiments are within the scope of the claims as attached. In some cases, the actions or steps recorded in the claims may be performed in an order different from the order in the embodiments and may still achieve desirable results. In addition, it is unnecessary for the processes depicted in the accompanying drawings to be performed in a particular illustrated order or in a sequential order to achieve the desirable results. Multitasking and parallel processing may be advantageous. Multitasking and parallel processing are also possible or may be advantageous in some embodiments.

While the specific embodiments of the present disclosure have been described above, the scope of the present disclosure is not limited to these embodiments. Various modifications and alternatives can be easily conceived by any of those skilled in the art without departing from the scope of the present disclosure. Therefore, these modifications and alternatives are to be encompassed by the scope of present disclosure as defined by the claims as attached.

## Claims

1. A configuration method for power distribution, comprising:
controlling closing of at least one target relay in response to a power distribution request instruction, the closing of the at least one target relay being configured to bring a target input channel of the power distribution into communication with a target output channel of the power distribution; and
traversing at least one power module until one of the at least one power module corresponding to the target input channel is determined, wherein during the traversing, steps are performed of:
controlling an output voltage of a current power module;
collecting a real-time voltage at the target output channel; and
determining a correspondence between the current power module and the target input channel when the real-time voltage matches with the output voltage.

2. The configuration method according to claim 1, wherein the at least one target relay comprises a plurality of target relays, and the plurality of target relays is arranged in a form of a matrix with N rows and M columns.

3. The configuration method according to claim 2, wherein said controlling the closing of the at least one target relay in response to the power distribution instruction further comprises:
closing the plurality of the target relays arranged in the matrix of the N rows and the M columns, target input channels where the plurality of target relays is located being different from each other.

4. The configuration method according to claim 2, wherein the plurality of target relays being arranged in the form of the matrix with the N rows and the M columns comprises:
the target relays in each of the M columns being positioned at one input channel, wherein the target relays located at the one input channel are connected to N predetermined voltage monitoring devices, respectively, each of the N predetermined voltage monitoring devices being configured to monitor the real-time voltage at the output channel.

5. The configuration method according to claim 1, wherein said controlling the output voltage of the current power module comprises:
controlling the power module to be connected in parallel with a set of power modules to output voltages.

6. The configuration method according to claim 1, further comprising, subsequent to said traversing the at least one power module until the one of the at least one power module corresponding to the target input channel is determined:
determining whether configurations of all power modules with the input channel are completed;
ending the configuration for the power distribution, in response to determining that the configurations of all power modules with the input channel are completed; and
controlling, in response to determining that the configurations of all the power modules with the input channel are not completed, closing of a next target relay, and traversing the at least one power module until one of the at least one power module corresponding to the target input channel is determined, until the configurations of all power modules with the input channel are completed.

7. The configuration method according to claim 1, further comprising, when the real-time voltage mismatches with the output voltage:
controlling an output voltage of a next power module;
collecting the real-time voltage at the target output channel;
determining whether the real-time voltage is equal to the output voltage of the next power module;
determining a correspondence between the next power module and the target input channel in response to determining that the real-time voltage is equal to the output voltage of the next power module; and
controlling, in response to determining that the real-time voltage is unequal to the output voltage of the next power module, the output voltage of the power module, and collecting the real-time voltage at the target output channel, until the real-time voltage value is equal to the output voltage of the power module.

8. A configuration system for power distribution, the configuration system comprising:
a response module configured to control closing of at least one target relay in response to a power distribution request instruction, the closing of the at least one target relay being configured to bring a target input channel of the power distribution into communication with a target output channel of the power distribution; and
a traversing module configured to traverse at least one power module until one of the at least one power module corresponding to the target input channel is determined, wherein during the traversing, steps are performed of:
a voltage control module configured to control an output voltage of a current power module;
a collection module configured to collect a real-time voltage at the target output channel; and
a relationship determination module configured to determine a correspondence between the current power module and the target input channel when the real-time voltage matches with the output voltage.

9. A configuration device for power distribution, the configuration device comprising:
a processor; and
a memory configured to store instructions executable by the processor,
wherein the processor is configured to execute the instructions to implement the configuration method according to any one of claims 1 to 7.

10. A storage medium, having at least one instruction or at least one program stored thereon, wherein the at least one instruction or the at least one program is loaded and executed by a processor to implement the configuration method according to any one of claims 1 to 7.
